# EUROPEAN PATENT SPECIFICATION

(11) **EP 2 653 207 B1**
(45) Date of publication and mention of the grant of the patent: **20.12.2017**
(21) Application number: 13001939.1
(22) Date of filing: 15.04.2013
(51) Int. Cl.: B01D 53/04

(54) **Installation for the purification of contaminated air and gases**
Anlage zur Reinigung von verunreinigter Luft und Gasen
Installation pour l'épuration de l'air et gaz contaminés

(30) Priority: 18.04.2012 BE 201200251
(43) Date of publication of application: 23.10.2013
(73) Proprietor: DESOTEC N.V., 8800 Roeselare-Rumbeke (BE)
(72) Inventor: Desmet, Joost, 8870 Izegem (BE)
(74) Representative: Pappaert, Kris

(56) References cited:
- EP-A1- 0 629 428
- EP-A2- 1 967 251
- DE-A1- 4 320 942
- FR-A1- 2 550 466
- US-A- 4 048 073
- US-A- 5 730 181
- US-A1- 2005 005 771
- US-A1- 2008 184 890
- US-A1- 2009 193 774
- US-B1- 6 436 175

## Description

The invention relates to a replaceable filter device for the purification of polluted air or gases emitted inter alia by industrial installations, comprising a filter housing provided with one or a plurality of filter elements with a filter bed in the longitudinal direction of the filter housing, characterized in that the air or gas inlet and outlet of the filter device are situated in the ground surface formed by one of the flat ends of the filter housing, and that the replaceable filter device can be connected via this ground surface onto a coupling platform of an industrial installation.

Many industrial processes generate gases that pollute the environment. This pollution can contain sulfates, nitrates, heavy metals (eg, Hg), organic impurities and/or other harmful, irritating components and odors. This pollution can be purged by various techniques, the most common techniques being air or gas scrubbing, biological filtration, active carbon filtration and incineration. Obviously, every technique has its specific applications, advantages and disadvantages, and cost factors depending on the precise circumstances, in particular the nature and the intensity of the pollution and the volume of air or gas to be treated.

The present invention relates to a new replaceable device for the purification of polluted air or gases by means of filtration through a filter bed. In air or gas filtration, polluted air or gas flows through a filter bed and pollutants are adsorbed by the adsorbent of the filter bed and removed from the air or gas.

Critical for such devices are a limited resistance of the filter device (i.e. a low pressure drop of the air or gas flow), a high adsorption capacity of the filter bed or, in other words, a large volume of adsorbent and a convenient replacement of the adsorbent in the filter on site or of the filter device as a whole when the adsorption capacity of the adsorbent is depleted.

Filter devices according to the state of the art are either fixed or replaceable. With fixed filter devices, the contaminated or saturated adsorbent of the filter bed is replaced on site by new or regenerated adsorbent; with replaceable filter devices, the filter device is disconnected and replaced by another replaceable filter device containing new or regenerated adsorbent. Replaceable filter devices are growingly popular because the replacement of saturated adsorbent in a fixed filter assembly is labor intensive and can be a dirty and particularly dangerous hazardous pollutants. The pollutants can aggressive and toxic, and with filter beds of fine carbonaceous adsorbent there also exists the danger of dust explosion.

Depending upon the nature and the intensity of the pollutants and the required quality of the purified air or gases, such fixed or replaceable filter devices can be mounted either individually or in a series of two or more filtration devices prior to the air or gas emission facility of an industrial installation. With a series of filter devices, the efficiency of the air or gas treatment can be ensured by countercurrent-flow arrangement of replaceable filter devices in series. In a countercurrent-flow arrangement, the most saturated filter device upfront the series of filter devices is removed, the second filter device takes the place of the removed filter device, and a new filter device is connected at the emission side of the series of filters. A better efficiency of the air or gas treatment by a countercurrent-flow arrangement with the aid of a series of two or more filter devices increases investment and operational costs and entrains higher labor intensity for replacing the adsorbent in one or more filter devices or for replacing the filter devices.

The adsorbent in the filter beds can be any suitable filtration and adsorption material but carbonaceous adsorbents, and activated carbons in particular, are preferred. Carbonaceous adsorbents have a micro-porous, inert carbon matrix with very large internal surface area that is very well suited for the adsorption and removal of pollutants from air or gases. Activated carbon, silica gels, zeolites, and even porous polymers in the form of pellets or granules having a diameter of between 1 and 10 mm and with high wear resistance, high thermal stability, small pore diameters and therefore large internal surface area may be suitable adsorbents, depending upon the specific circumstances. The specific circumstances are determined, inter alia, by the nature and the intensity of the pollution, the volume of air or gases to be treated and the required quality of the purified air or gases.

Under industrial installations are understood not only plants of manufacturing industries with more or less heavily polluted air or gas emissions, but also biogas plants and various incineration, composting and soil treatment installations.

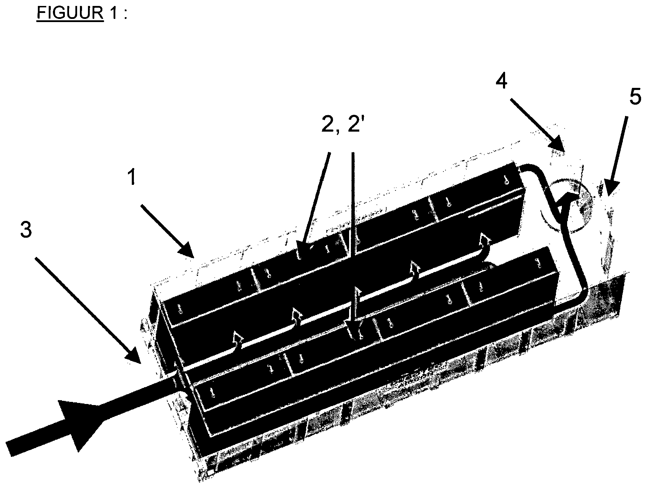

Figure 1 illustrates a replaceable filter device according to the state of the art, i.e. the Community design registration No 000898267-0001 in the name of Desotec. This replaceable filter device, which can be coupled by means of two connection couplings with compensator upfront the emission facility of an industrial installation, contains a housing (1) and two filter elements (2, 2') each with a filter bed in the longitudinal direction of the housing. The air or the gas is supplied via a first connection coupling with compensator connected to the air or gas inlet (3) of the replaceable filter device, passed through the two filter elements (2, 2') with filter bed and then brought together in an outlet compartment (4) before it is returned to the air or gas emission facility of the industrial installation through a connection coupling with compensator connected to the air or gas outlet (5) of the filter device.

The air or gas inlet (3) and the air or gas outlet (5) of fixed and replaceable filter devices according to the state of the art may be located in one or two free ends or free sides of the filter housing. The fixed or replaceable filter devices according to the state of the art require free ends or sides for the manual connection of the filter device to the air or gas emission facilities of industrial installations. With filter devices according to the state of the art, the air or gas inlet (3) and air or gas outlet (5) are not in the ground plane of the filter housing. The ground plane is the end (for upright filter devices) or the side (for horizontal filter devices) of the filter housing when the filter housing is in operation. In the replaceable filter arrangement according to the state of the art such as the one depicted in Figure 1, the air or gas inlet (3) is located at a free end and the air or gas outlet (5) is located at a free side of the filter housing.

Such filter devices usually have a rectangular-shaped filter housing but cylindrical filter housings are also common. Cylindrical filter housings have the advantage that they can easily be cleaned with steam, have higher pressure resistance and can be provided with a corrosion-resistant coating or inner layer. A corrosion-resistant coating or inner layer may be necessary for some particular applications because of the aggressiveness or the corrosiveness of pollutants in the air or gases to be treated

Filter housings may hold one or more planar or concentric filter elements in the longitudinal direction of the filter housing. A filter element is composed of two flat or concentric perforated plates and a filter bed of adsorbent held between the two perforated plates of the filter element. The perforations in the perforated plate have an average diameter of 1 to 3 mm and form the free surface of the filter bed. The free surface is 10% to 40% of the total surface area of the perforated plates, preferably from 20% to 35%.

Cylindrical filter housings cannot hold more than one filter element having maximum length and height. When using two or more filter beds, the height of the filter beds is limited and the filtration surface area at the air or gas inlet is higher than the filtration surface area at the air or gas outlet because of the cylindrical shape (i.e., the circular or oval cross-section) of the filter housing. The difference in filtration surface area between inlet and outlet causes substantial air resistance and pressure drop of the air or gas to be treated.

The filter elements of rectangular-shaped filter housings have maximum height and length, and maximum filtration surface area identical at air or gas inlet and outlet. The filter elements of rectangular filter housings thus have greater filtration surface area and higher volume of adsorbent, and hence also a higher filtration capacity and efficiency than filter devices with cylindrical filter housing of comparable dimensions. Dimensions of the filter housings are indeed limited, particularly for road transportation of the filter devices.

Replaceable filters according to the state of the art can be positioned horizontally, or vertically when air or gas inlet (3) and/or air or gas outlet (5) are located at one or two free sides of the filter device. A horizontal positioning of the replaceable filter arrangement according to the prior art has the disadvantages that the replaceable filter device has a larger base area, and hence takes up more space, and that the coupling of the replaceable filter device to the air or gas emission facility of the industrial installation is still quite difficult and labor intensive. A vertical positioning has the additional disadvantage that the connection of the replaceable filter at the air or gas emission facility of the industrial installation is also dangerous and thus requires additional safety measures.

The coupling of a vertically positioned replaceable filter device by means of couplings with compensator is problematic not only because of the dimensions and hence the weight of the intermediate pieces and flange couplings (at a flow rate of 5,000 m³/hr to 60,000 m³/h, the intermediate pieces and flange couplings must have a diameter of from 500 mm to 1100 mm to limit air resistance of the filter device and pressure loss), but also because of the difficult accessibility of the air or gas outlet (5) at the top of the filter device. With a replaceable filter device for the purification of air or gas flows at a rate of 5.000 m³ to 60,000 m³/h, the filter housing is about 3 to 10 m long and the coupling of the filter device at 3 to 10 m height by means of a coupling with compensator of such large dimensions to the upright replaceable filter device requires a crane and specific security measures that renders the replacement and the connection of replaceable filter devices according to the state of the art most difficult.
In addition, the adsorption capacity of replaceable filter devices according to the state of the art is limited. The construction of the filter device according to the state of the art, with its housing (1), two filter elements (2, 2'), air or gas inlet (3) and outlet compartment (4) prior to the air or gas outlet (5), seeks to limit air resistance of the filter device and loss of pressure for the air or gas flow to be treated. Particularly because of the outlet compartment (4) in front of the air or gas outlet (5), the volume of adsorbent in the filter elements (2, 2') and the adsorption capacity of the filter device are limited. Scaling the replaceable filter device according to the state of the art to increase adsorption capacity of the replaceable filter device and the volume of adsorbent in the filter elements (2, 2') is limited. The weight and dimensions of the filter device must indeed allow transportation by road (also with saturated adsorbent), as well as replacement of the replaceable filter devices and connection of the replaceable filter devices to the air or gas emission facility of the industrial installation.
With the replaceable filter device according to the present invention, the connection of the replaceable filter device to the air or gas emission facility is not problematic, not dangerous nor labor-intensive and the filter device of the present invention has higher volume capacity for adsorbent and thus a higher adsorption capacity, without suffering the drawbacks of filter devices according to the state of the art.

The invention relates to a replaceable filter device for the purification of polluted air or gases emitted inter alia by industrial installations, comprising an upright filter housing characterized in that the upright filter housing is rectangular-shaped and that the filter device comprises two or more filter elements that cover 90 to 100% of the internal length of the upright filter housing with a flat filter bed in the longitudinal direction of the upright filter housing and characterised in that all the air or gas inlet and outlet of the filter device are situated in the same ground plane formed by one of the flat ends of the upright filter housing, wherein the ground plane is the end of the upright filter housing when the upright filter housing is in operation and the replaceable filter device can be connected via this ground plane onto a coupling platform of an industrial installation. The replaceable filter device according to the present invention can, in a mechanical manner and without human intervention, be tilted from a truck and put down onto a coupling platform that is connected to the air or gas emission facility of an industrial installation and that is provided with openings corresponding to the air or gas inlet and outlet of the replaceable filter device. The connection of the replaceable filter device according to the invention is therefore not problematic because of intermediate pieces and large flange couplings, nor dangerous and labor intensive because of the connection of the replaceable filter device is merely mechanical without any human intervention being necessary. The connection of the replaceable filter device according to the present invention is very quick and virtually excludes complications and process interruptions for the industrial installation.
The coupling platform onto which the replaceable filter device according to the present invention is tilted, is provided with an air or gas inlet and outlet connected to the air or gas emission facility of the industrial installation by means of traditional connectors, openings in the coupling platform surface that are in line with the air or gas inlet and outlet in the base of the replaceable filter device when the replaceable filter device is tilted onto the coupling platform, and internal connections (channels) between the air or gas inlet and outlet of the coupling platform on the one hand and the openings in the platform surface on the other.
The air or gas inlet and outlet in the ground plane of the filter device according to the invention are in line with the corresponding apertures in the coupling platform's surface onto which the filter device according to the invention is tilted and that is connected to the air or gas emission facility of the industrial installation. In the context of this description, tilting means dropping of a replaceable filter device onto the coupling platform for example by means of a truck provided with a crane arm. Obviously, dropping of a replaceable filter device onto the coupling platform by other mechanical means also belongs to the scope of this invention.

The replaceable filter device according to the present invention has a larger volume capacity for adsorbent, and thus a higher adsorption capacity, than a filter device according to the state of the art with substantially identical dimensions and weight. The replaceable filter device according to the present invention thus provides, in addition to a faster, easier and more secure connection to the air or gas emission facility of the industrial installation, a higher loading or adsorptive capacity so that the durability of the replaceable filter devices according to the present invention is higher and the costs for transportation and for connection of the filter devices can be further reduced.

Because the air or gas inlet and outlet of the filter device according to the invention are in the same ground plane, the outlet compartment for the air or gas outlet may be omitted to the extent that a higher volume of adsorbent can be loaded and that additional adsorption capacity can be provided.

The replaceable filter according to the invention thus offers numerous advantages in comparison with the replaceable filter devices according to the state of the art. Quite surprisingly, it has also been found that the pressure of the air or gas flow after the air or gas inlet in the replaceable filter device according to the invention is virtually equally distributed over the entire surface of the filter elements with filter bed of adsorbent. The air or gas pressure is equally distributed over the entire filter bed surface and the flow is not shortcircuited through part of the filter bed adjacent to the air or gas inlet and outlet. We tend to believe that this equal distribution of pressure over the entire surface of the filter elements may be due to the larger filtration surface of the filter elements.

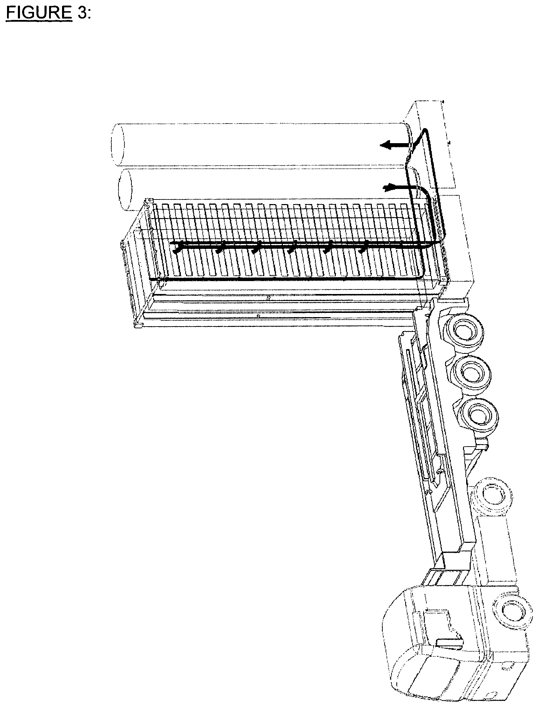

The invention will be further clarified with reference to the following drawings. In these drawings:

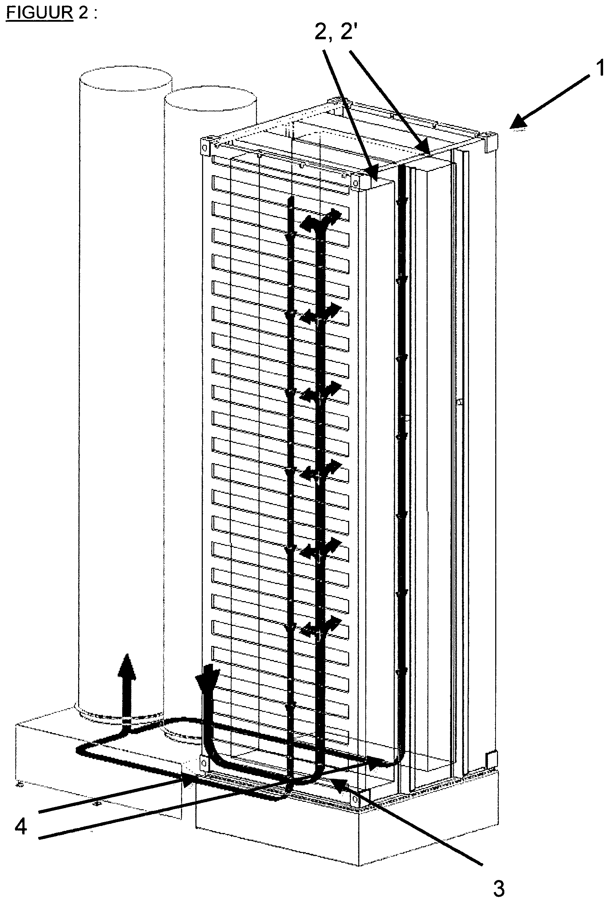

- Figure 2: a schematic representation of a filter device according to the invention, and
- Figure 3: a schematic representation of the tilting of a filter device according to the invention onto a coupling platform that is connected to the air or gas emission facility of the industrial installation and that is provided with openings corresponding to the air or gas inlet and outlet in the base of the replaceable filter device.
The filter apparatus according to the present invention provides for a housing (1) and filter elements (2, 2') with filter bed of adsorbent in the longitudinal direction of the housing, said filter device being characterized in that the air or gas inlet and outlet of the filter device are situated in the ground surface formed by one of the flat ends of the filter housing, and that the replaceable filter device can be connected via this ground surface onto a coupling platform of an industrial installation.
In other words, because the air or gas inlet and outlet are located on the same ground plane, contrary to replaceable filter devices according to the state of the art, there is no outlet compartment (4) required to the extent that the filter elements (2, 2') may cover 90 to 100% and preferably 95 to 100% of the internal length of the filter housing, that a greater filtration surface is formed, that the filter bed in the filter elements (2, 2') can contain a larger volume of adsorbent and that the adsorption capacity of the filter device according to the invention increases substantially.
The housing of the replaceable filter device according to the present invention is rectangular. Depending on the nature and intensity of the pollution and the required quality of the purified air or gas flow, the replaceable filter device according to the invention can be mounted either individually or in a series of two or more filtration devices for the air or gas emissions from an industrial facility. For large flows of polluted air or gas, two or more individual filter devices or series of filter devices may also be mounted in parallel.
The adsorbent in the replaceable filter device according to the present invention may be any suitable filtration and adsorption substance, but carbonaceous adsorbents, and in particular activated carbons, are preferred. The replaceable filter device according to the invention includes two or more filter elements with filter bed of adsorbent in the longitudinal direction of the housing. An optimal ratio between the filtration surface area and volume of adsorbent is, however, achieved by means of two flat filter elements in the longitudinal direction of a rectangular-shaped filter housing.
Other embodiments of the filter device according to the invention may also include more air or gas inlets and/or outlets in the same ground plane of the filter device. Two or more air or gas inlets and/or outlets on the same ground plane have a favorable effect on the flow rate of the air or gas to be purified but also increases the cost of the device and of the coupling platform on which the replaceable filter device according to the invention is tilted. After all, the platform surface must be provided with openings for air or gas supply and outlet that are in line with the openings for air or gas inlet (3) and outlet (4) in the ground plane of the replaceable filter device according to the invention.
The filter device according to the invention is tilted, as depicted in Figure 3, with the aid of a truck onto the coupling platform that is connected to the air or gas emission facility of the industrial installation and that is provided, in the platform's surface, with openings for air or gas supply and discharge that correspond with the openings for air or gas inlet (3) and outlet (4) in the ground plane of the replaceable filter device according to the invention. Because of the construction, and especially because of the filter device's own weight, there is hardly any loss of pressure or leakage of air or gas between the platform surface onto which the filter device according to the invention is tilted and the ground plane of the filter apparatus itself.
If necessary, the connection of the openings for air or gas supply and discharge in the platform surface and the air or gas inlet (3) and outlet (4) in the ground plane of the filter device may be sealed by means of rubber or plastic seals.

The present invention not only pertains to an replaceable filter device for the purification of air or gas streams of industrial installations comprising an upright filter housing with a plurality of filter elements having filter bed of adsorbent in the longitudinal direction of the housing, and with air or gas inlet and outlet on the same ground plane. The invention also relates to a device comprising a replaceable filter device as described above and a coupling platform onto which the replaceable filter device can be tilted, a coupling that is connected to the air or gas emission facility of the industrial installation and which surface is provided with openings for air- or gas supply and discharge corresponding with the openings for air or gas inlet (3) and outlet (4) in the base of the replaceable filter device. An embodiment which is not part of the invention relates to a process for the purification of air or gas streams by filtration with the aid of a replaceable filter device comprising a filter housing provided with one or a plurality of filter elements having a filter bed of adsorbent in the longitudinal direction of the housing and with air or gas inlet and outlet being in the same ground plane, and a coupling platform that is connected to the air or gas emission facility of the industrial installation onto which said replaceable filter device can be tilted and which platform surface is provided with openings for air or gas supply and outlet corresponding with the openings for air or gas inlet (3) and outlet (4) in the ground plane of the replaceable filter device.

## Claims

1. Replaceable filter device for the purification of air or gases, comprising an upright filter housing (1) **characterized in that** the upright filter housing (1) is rectangular-shaped and that the filter device comprises two or more filter elements (2,2') that cover 90 to 100% of the internal length of the upright filter housing (1) with a flat filter bed in the longitudinal direction of the upright filter housing (1), and **characterized in that** all the air or gas inlet (3) and outlet (4) of the filter device are situated in the same ground plane formed by one of the flat ends of the upright filter housing (1), wherein the ground plane is the end of the upright filter housing when the upright filter housing is in operation and the replaceable filter device can be connected via this ground plane onto a coupling platform of an industrial installation.

2. Replaceable filter device according to claim 1, wherein the replaceable filter device is adapted to be connected onto the coupling platform via openings in the coupling platform corresponding with the openings for air or gas inlet (3) and outlet (4) in the ground plane of the replaceable filter device.

3. Replaceable filter device according to any of the preceding claims, wherein the replaceable filter device is configured for tilting from a truck onto the coupling platform with a tilting means.

4. Replaceable filter device according to anyone of the preceding claims, **characterized in that** the filter elements (2,2') with filter bed in the longitudinal direction of the filter housing covers 95% to 100% of the internal length of the filter housing (1).

5. Replaceable filter device according to anyone of the preceding claims, **characterized in that** the filter device contains one air or gas inlet and two air or gas outlets, all situated in the same ground plane formed by one of the flat ends of the filter housing (1) as defined in claim 1.

6. Replaceable filter device according to anyone of the preceding claims, **characterized in that** the connection of the openings for air and gas supply and discharge in the coupling platform's surface and the air or gas inlet and outlet in the ground plane of the filter device is sealed by means of a rubber or plastic joint fittings.

7. Replaceable filter device according to anyone of the preceding claims, **characterized in that** the filter bed is an adsorbent selected from activated carbon, silica gels, zeolites, porous polymers or mixtures thereof, preferably activated carbon.

8. A device for purifying air or gases comprising one or more replaceable filter devices according to anyone of the preceding claims.

## Patentansprüche

1. Austauschbare Filtervorrichtung zur Reinigung von Luft oder Gasen, die ein aufrechtstehendes Filtergehäuse (1) umfasst, **dadurch gekennzeichnet, dass** das aufrechtstehende Filtergehäuse (1) rechtwinklig ausgebildet ist und dass die Filtervorrichtung zwei oder mehr Filterelemente (2,2') umfasst, die 90 bis 100% der Innenlänge des aufrechtstehenden Filtergehäuses (1) mit einem Flachfilterbett in der Längsrichtung des aufrechtstehenden Filtergehäuses (1) abdecken, und **dadurch gekennzeichnet, dass** sich die Luft- oder Gaseinlässe (3) und -auslässe (4) der Filtervorrichtung in derselben, von einem der flachen Enden des aufrechtstehenden Filtergehäuses (1) gebildeten Bodenfläche befinden, wobei die Bodenfläche das Ende des aufrechtstehenden Filtergehäuses ist, wenn das aufrechtstehende Filtergehäuse in Betrieb ist, und wobei die austauschbare Filtervorrichtung über diese Bodenfläche mit einer Kopplungsplattform einer Industrieanlage verbunden werden kann.

2. Austauschbare Filtervorrichtung nach Anspruch 1, wobei die austauschbare Filtervorrichtung ausgebildet ist, um mit der Kopplungsplattform über Öffnungen in der Kopplungsplattform verbunden zu werden, die den Öffnungen für den Luft- oder Gaseinlass (3) und -auslass (4) in der Bodenfläche der austauschbaren Filtervorrichtung entsprechen.

3. Austauschbare Filtervorrichtung nach einem der vorstehend aufgeführten Ansprüche, wobei die austauschbare Filtervorrichtung ausgebildet ist, um mit einem Kippmittel von einem Lastkraftwagen auf die Kopplungsplattform abgekippt zu werden.

4. Austauschbare Filtervorrichtung nach einem der vorstehend aufgeführten Ansprüche, **dadurch gekennzeichnet, dass** die Filterelemente (2,2') mit Filterbett in der Längsrichtung des Filtergehäuses 95 bis 100% der Innenlänge des Filtergehäuses (1) abdecken.

5. Austauschbare Filtervorrichtung nach einem der vorstehend aufgeführten Ansprüche, **dadurch gekennzeichnet, dass** die Filtervorrichtung einen Luft- oder Gaseinlass und zwei Luft- oder Gasauslässe enthält, die sich alle in derselben, von einem der flachen Enden des Filtergehäuses (1) gebildeten Bodenfläche befinden, wie in Anspruch 1 definiert.

6. Austauschbare Filtervorrichtung nach einem der vorstehend aufgeführten Ansprüche, **dadurch gekennzeichnet, dass** die Verbindung der Öffnungen für Luft- und Gaszufuhr sowie -abführung in der Fläche der Kopplungsplattform sowie auch der Luft- oder Gaseinlass und -auslass in der Bodenfläche der Filtervorrichtung mittels eines Gummi- oder Kunststoffverbindungsteils abgedichtet ist.

7. Austauschbare Filtervorrichtung nach einem der vorstehend aufgeführten Ansprüche, **dadurch gekennzeichnet, dass** das Filterbett ein Adsorptionsmittel ist, ausgewählt aus der Reihe Aktivkohle, Kieselgele, Zeolithe, poröse Polymere oder Gemische davon, wobei Aktivkohle bevorzugt wird.

8. Anlage zur Reinigung von Luft oder Gasen, die eine oder mehrere austauschbare Filtervorrichtungen nach einem der vorstehend aufgeführten Ansprüche umfasst.

## Revendications

1. Dispositif de filtration remplaçable pour l'épuration d'air ou de gaz, comprenant un boîtier de filtre vertical (1), **caractérisé en ce que** le boîtier de filtre vertical (1) est de forme rectangulaire et **en ce que** le dispositif de filtration comprend deux ou plus de deux éléments de filtre (2, 2') qui couvrent de 90 % à 100 % de la longueur interne du boîtier de filtre vertical (1) avec un lit de filtration plat dans la direction longitudinale du boîtier de filtre vertical (1), et **caractérisé en ce que** la totalité de l'entrée (3) et de la sortie (4) d'air ou de gaz du dispositif de filtration est située dans le même plan de base formé par une des extrémités plates du boîtier de filtre vertical (1), dans lequel le plan de base est l'extrémité du boîtier de filtre vertical lorsque le boîtier de filtre vertical est en fonctionnement, et **en ce que** le dispositif de filtration remplaçable peut être connecté par l'intermédiaire de ce plan de base sur une plate-forme de couplage d'une installation industrielle.

2. Dispositif de filtration remplaçable selon la revendication 1, dans lequel le dispositif de filtration remplaçable est apte à être connecté sur la plate-forme de couplage par l'intermédiaire d'ouvertures dans la plate-forme de couplage qui correspondent aux ouvertures pour l'entrée (3) et la sortie (4) d'air ou de gaz dans le plan de base du dispositif de filtration remplaçable.

3. Dispositif de filtration remplaçable selon l'une quelconque des revendications précédentes, dans lequel le dispositif de filtration remplaçable est configuré de manière à être incliné à partir d'un camion sur la plate-forme de couplage à l'aide de moyens d'inclinaison.

4. Dispositif de filtration remplaçable selon l'une quelconque des revendications précédentes, **caractérisé en ce que** les éléments de filtre (2, 2') avec le lit de filtration dans la direction longitudinale du boîtier de filtre couvrent de 95 % à 100 % de la longueur interne du boîtier de filtre (1).

5. Dispositif de filtration remplaçable selon l'une quelconque des revendications précédentes, **caractérisé en ce que** le dispositif de filtration comporte une entrée d'air ou de gaz et deux sorties d'air ou de gaz, toutes situées dans le même plan de base formé par une des extrémités plates du boîtier de filtre (1) selon la revendication 1.

6. Dispositif de filtration remplaçable selon l'une quelconque des revendications précédentes, **caractérisé en ce que** la connexion des ouvertures pour la fourniture et la décharge d'air et de gaz dans la surface de la plate-forme de couplage et l'entrée et la sortie d'air ou de gaz dans le plan de base du dispositif de filtration est étanchéifiée à l'aide de raccords de jonction en caoutchouc ou en plastique.

7. Dispositif de filtration remplaçable selon l'une quelconque des revendications précédentes, **caractérisé en ce que** le lit de filtration est un adsorbant sélectionné parmi le charbon actif, des gels de silice, des zéolites, des polymères poreux ou des mélanges de ceux-ci, de préférence le charbon actif.

8. Dispositif d'épuration d'air ou de gaz comprenant un ou plusieurs dispositif(s) de filtration remplaçable(s) selon l'une quelconque des revendications précédentes.
